# EUROPÄISCHE PATENTSCHRIFT

(11) **EP 1 310 347 B1**
(45) Veröffentlichungstag und Bekanntmachung des Hinweises auf die Patenterteilung: **15.06.2011**
(21) Anmeldenummer: 02025114.6
(22) Anmeldetag: 08.11.2002
(51) Int. Cl.: B29C 47/42, B29C 47/50, F04C 2/14

(54) **Extruderanordnung mit Planetenpumpe**
Extruder incorporating planetary gear pump
Extrudeuse avec pompe à engrenage planétaire

(30) Priorität: 08.11.2001 DE 10154860
(43) Veröffentlichungstag der Anmeldung: 14.05.2003
(73) Patentinhaber: A-Z Formen- und Maschinenbau GmbH, 80992 München (DE)
(72) Erfinder: Fischer, Florian W., 85560 Ebersberg (DE)
(74) Vertreter: Baronetzky, Klaus

(56) Entgegenhaltungen:
- WO-A-02/26471
- DE-C1- 3 631 527
- US-A- 4 721 589

## Beschreibung

Die Erfindung betrifft eine Extruderanordnung, gemäß dem Oberbegriff von Anspruch 1.

Aus der älteren WO 02/26471 A1 ist eine Extruderanordnung mit einer Planetenpumpe bekannt geworden. Bei unterschiedlicher Viskosität der zu extrudierenden Medien treten bei dieser Extruderanordnung jedoch unterschiedliche Ergebnisse auf.

Eine derartige Extruderanordnung ist aus der EP-A1-508 079 bekannt. Bei dieser Lösung ist ein Extruder mit einer Zahnradpumpe kombiniert. Zahnradpumpen sind drucksteifer als Schneckenextruder. Zudem ist der Wirkungsgrad einer Zahnradpumpe deutlich besser, so dass die zu fördernde Masse eine geringere Temperatur aufweisen kann. Außerdem werden die durch die Schneckenwände in die zu extrudierende Masse eingeleiteten Schwingungen der Zahnradpumpe gedämpft.

Allerdings weist eine Zahnradpumpe den Nachteil auf, dass gewisse Leckströme entstehen, die einer separate Abdichtung bedürfen. Eine Zahnradpumpe muss sehr präzise gefertigt werden, was die Fertigung verteuert.

Ferner ist es bereits vorgeschlagen worden, eine Pumpe nach der Art eines Planetengetriebes aufzubauen. Eine derartige Pumpe wird hier der Einfachheit halber als Planetenpumpe bezeichnet. Bei dieser Lösung kann das Sonnenrad direkt mit der Extruderschnecke des Schneckenextruders verbunden sein, so dass eine separate Lagerung der Schneckenspitze entbehrlich ist. Die Abstützung der Schneckenspitze kann vielmehr auf der stromab vorgesehenen Seite der Planetenpumpe vorgesehen sein.

Nachteilig bei dieser Lösung ist, dass das Förderverhalten elastomerer Massen wie Gummi oder Kautschukmischungen für die Reifenindustrie stark von verschiedenen Parametern abhängt. Wenn auf Grund der vorliegenden Viskosität der Masse die Planetenpumpe stärker fördert als die Extruderschnecke, entsteht Unterdruck im Übergangsbereich. Dieser kann zur Bläschenbildung führen, so dass die Qualität der geförderten Masse nicht akzeptabel ist.

Um dies mit Gewissheit auszuschließen, kann man zwar die Förderrate der Extruderschnecke vergrößern. Dann entsteht jedoch je Überdruck im Übergangsbereich, der die Konstruktion belastet und den Wirkungsgrad verschlechtert.

Daher liegt der Erfindung die Aufgabe zu Grunde, eine Extruderanordnung gemäß dem Oberbegriff von Anspruch 1 zu schaffen, die eine verbesserte Qualität der zu extrudierenden Masse aufweist, wobei dennoch eine preisgünstige Herstellung nötig sein soll.

Diese Aufgabe wird erfindungsgemäß durch Anspruch 1 gelöst. Vorteilhafte Weiterbildungen ergeben sich aus den Unteransprüchen.

Die erfindungsgemäße Lösung erlaubt es mit überraschend einfachen Mitteln, die Qualität des Extrudats kontinuierlich gleichbleibend zu halten, auch wenn unterschiedliche Massen, wie einerseits synthetische Kautschukmischungen und andererseits Mischungen aus natürlichem Kautschuk oder Gummi eingesetzt werden. Ein Schneckenextruder fördert auf Grund der Innenreibung und erzeugt eine Schleppströmung entlang der Extruderschnecke. Demgegenüber ist eine Planetenpumpe ein volumetrischer Förderer, so dass hier die Förderrate wesentlich weniger von der Viskosität der zu fördernden Masse abhängt. Die erfindungsgemäße Lösung erlaubt es daher auch, relativ viskositätsunabhängig zu fördern, wobei dennoch durch die erfindungsgemäße Planetenpumpe ein guter Wirkungsgrad erzielbar ist.

Durch die drehbare Lagerung des Außenrings der Planetenpumpe lässt sich die Förderrate der Planetenpumpe in hohem Maße einstellen.

Beispielsweise kann der Außenring mit einer Bremse versehen werden, die steuerbar ist. Dann ist lediglich ein Antriebsmotor für die Extruderschnecke erforderlich, der dann auch gleich das Sonnenrad oder den Planetenträger der Planetenpumpe antreibt. Die Einstellung erfolgt so, dass auch bei der höchsten Viskosität der zu fördernden Masse die Förderrate der Planetenpumpe noch ausreicht, dass kein Überdruck eingangsseitig der Planetenpumpe entsteht. In diesem Zustand wird dann die Bremse aktiviert, so dass sich der Außenring nicht oder nahezu nicht mitdreht.

Wenn die Viskosität geringer ist, sinkt auch die Förderrate durch die Extruderschnecke, so dass die Planetenpumpe bei stehendem Außenring eine zu hohe Förderrate aufweisen würde und Unterdruck im Übergangsbereich entstehen würde. Erfindungsgemäß wird dann ermöglicht, dass sich der Außenring etwas dreht. Hierdurch sinkt dann die Förderrate der Planetenpumpe, so dass wiederum gleich Förderraten zwischen Planetenpumpe und Extruderschnecke vorliegen.

Die Einstellung der Bremse kann entweder basierend auf Erfahrungswerten in Abhängigkeit von der Viskosität der zu fördernden Masse vorgegeben werden, oder es erfolgt eine automatische Anpassung, die dann beispielsweise auf einer Druckmessung im Übergangsbereich zwischen Extruderschnecke und Planetenpumpe beruht.

Eine Steuervorrichtung wird bei dieser Ausführungsform von dem dort vorgesehenen Drucksensor angesteuert und stellt ihrerseits die Bremskraft der Bremse ein.

In einer modifizierten Ausgestaltung ist es auch möglich, anstelle der Bremse einen separaten Antriebsmotor zu verwenden, der eine noch feinfühligere Einstellung erlaubt.

Die erfindungsgemäße Lösung erlaubt es, eine lastsymmetrische Förderung zu realisieren. Die Schrägverzahnung der Planetenpumpe, also auch der Planetenräder, ermöglicht eine volumetrische Förderung. Die Schrägverzahnung kann einen beliebigen geeigneten Winkel aufweisen, beispielsweise einenn Winkel von von 10 bis 60 Grad, bevorzugt etwas über 20 Grad.

Die Planetenpumpe ist selbstreinigend und kann die Schneckenspitze lagern. Durch die Realisierung an der Schneckenspitze ist eine preisgünstige Fertigung möglich, und das Entstehen von Leckströmen durch Zahnräder nach außen wie bei einer Zahnradpumpe ist nicht möglich. Durch die Planetenpumpe lässt sich ein guter Wirkungsgrad realisieren, und es erfolgt eine volumetrische Förderung, die von dem erfindungsgemäßen Material unabhängig ist. Andererseits ist erfindungsgemäß sichergestellt, dass mit der erfindungsgemäßen Lösung die Planetenpumpe stets mit Masse versorgt wird, so dass sie auch stets fördert.

Weitere Vorteile, Einzelheiten und Merkmale ergeben sich aus der nachstehenden Beschreibung eines Ausführungsbeispiels anhand der Zeichnung.

Es zeigen:
- Fig. 1: eine schematische Ansicht einer erfindungsgemäßen Extruderanlage in einer erfindungsgemäßen Ausführungsform; und
- Fig. 2: eine schematische Ansicht eines Planetenträgers für eine erfindungsgemäße Planetenpumpe.

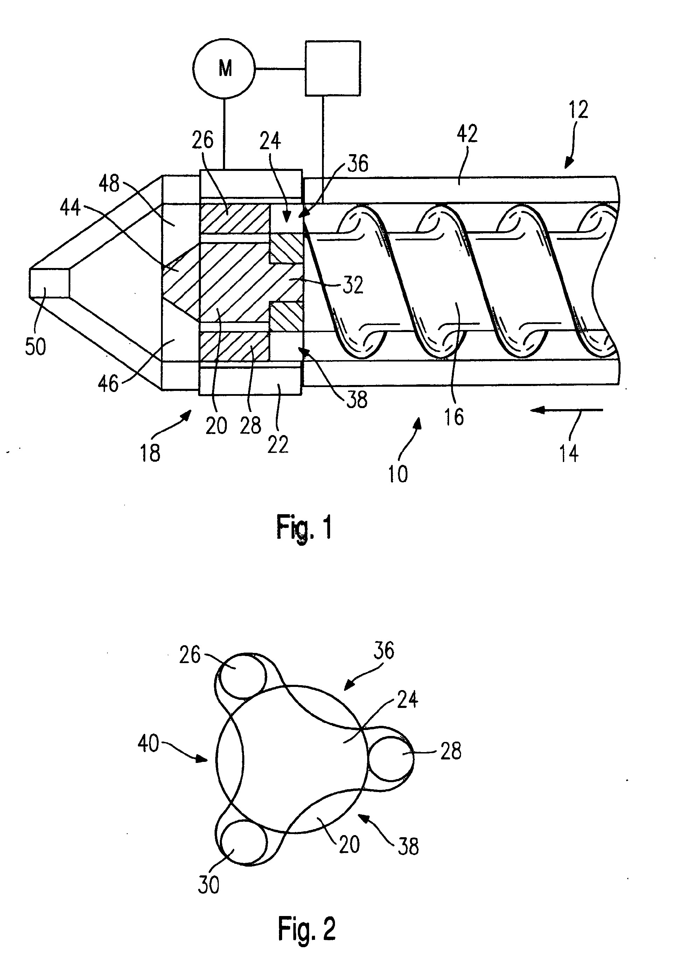

Die in Fig. 1 dargestellte Extruderanlage 10 weist einen Schneckenextruder 12 auf, der in Richtung des Pfeils 14 von einer nicht dargestellte zu extrudierenden Masse durchströmt wird. Hierzu dreht sich die Extruderschnecke 16 in an sich bekannter Weise.

Die in Fig. 1 dargestellte Extruderanlage weiste ferner anschließend an den Schneckenextruder 12 eine Planetenpumpe 18 auf. Die Planetenpumpe 18 besteht aus einem Sonnenrad 20, einem Außenring 22, einem Planetenträger 24 und einer Mehrzahl von Planetenrädern 26, 28 und 30, von denen die Planetenräder 26 und 28 aus Fig. 1 und das Planetenrad 30 auch aus Fig. 2 ersichtlich ist.

Das Sonnenrad 20 ist erfindungsgemäß drehfest mit dem Extruderschnecke 16 verbunden, beispielsweise durch direkte mechanische Kopplung. Seine Antriebswelle 32 ist in die Extruderschnecke 16 eingesteckt und durchtritt den Planetenträger 24.

Der Planetenträger 24 lagert in an sich bekannter Weise die Planetenräder 26 bis 30 so, dass sie auf dem Sonnenrad 20 umlaufen. Zwischen den Stellen der Lagerung der Planetenräder 26 bis 30 sind Einbuchtungen 36, 38 und 40 vorgesehen, die von der Masse durchströmt werden können.

Die Planetenräder 26 bis 30 laufen auf dem Außenring 22 ab. Der Außenring 22 ist erfindungsgemäß gegenüber dem Gehäuse 42 des Schneckenextruders 12 drehbar gelagert. Wenn der Außenring 22 sich dementsprechend in Drehrichtung der Extruderschnecke und des Sonnenrads 20 mitdreht, ist die Förderrate der Planetenpumpe 18 geringer. Die Förderrate ist höher, wenn der Außenring 22 in Gegenrichtung angetrieben wird.

Das Sonnenrad 20 ist stromab an einem Lager 44 abgestützt, das über Streben 46, 48 an dem Gehäuse 42 abgestützt ist. Bevorzugt ist das Sonnenrad 20 auch biegefest mit der Extruderschnecke 16 verbunden, so dass das Lager 44 auch die Extruderschnecke 10 lagert.

In an sich bekannter Weise ist ausgangsseitig eine Extrusionsdüse 50 vorgesehen, die in Fig. 1 nur schematisch angedeutet ist.

Aus Fig. 2 ist ersichtlich, in welcher Weise der Planetenträger 24 die Planetenräder 26 bis 30 lagert. Es sind vergleichsweise größe Einbuchtungen 36 bis 40 vorgesehen, so dass die zu extrudierende Masse einen geringen Durchströmungswiderstand überwinden muss.

## Patentansprüche

1. Extruderanordnung (1) für viskose Massen, insbesondere Gummi oder natürliche oder synthetische Kautschukmischungen, mit einem Schneckenextruder (12) mit einer Extruderschnecke (16), an den sich in Förderrichtung stromab eine Fördervorrichtung anschließt, wobei die Fördervorrichtung eine Planetenpumpe (18) ist, deren Außenring (22) drehbar gelagert ist, **dadurch gekennzeichnet, dass** ein Druckfühler eingangsseitig der Planetenpumpe (18) vorgesehen ist, der an eine Steuervorrichtung angeschlossen ist, die die Drehung des Außenrings (22) steuert.

2. Extruderanordnung (1) nach Anspruch 1, **dadurch gekennzeichnet, dass** die Planetenpumpe (18) nach der Art eines Planetengetriebes mit Schrägverzahnung ausgebildet ist.

3. Extruderanordnung (1) nach einem der vorhergehenden Ansprüche, **dadurch gekennezeichnet, dass** das Sonnenrad (20) der Planetenpumpe (18) mit der Extruderschnecke (16) drehfest verbunden ist.

4. Extruderanordnung nach einem der Ansprüche 1 oder 2, **dadurch gekennzeichnet, dass** der Planetenträger (24) mit der Extruderschnecke (16) drehfest verbunden ist.

5. Extruderanordnung nach einem der vorhergehenden Ansprüche, **dadurch gekennzeichnet, dass** der Außenring (22) mit einer Bremse gekoppelt ist.

6. Extruderanordnung nach einem der vorhergehenden Ansprüche, **dadurch gekennzeichnet, dass** der Außenring (22) mit einem separaten Antrieb versehen ist, der steuerbar ist.

7. Extruderanordnung nach dem Anspruch 5, **dadurch gekennzeichnet, dass** die Bremse einstellbar und/oder von der Steuervorrichtung steuerbar ist.

8. Extruderanordnung nach einem der vorhergehenden Ansprüche, **dadurch gekennzeichnet, dass** die Planetenräder (26 bis 30) von der Saugseite her gelagert sind und der Planetenträger (24) Einbuchtungen (36, 38 und 40) aufweist, welche von der viskosen Masse durchströmbar sind.

9. Exruderanordnung nach einem der vorhergehenden Ansprüche, **dadurch gekennzeichnet, dass** die Schrägverzahnung einen Winkel von 10 bis 60 Grad, bevorzugt etwas über 20 Grad aufweist.

## Claims

1. An extruder arrangement (1) for viscous compounds, in particular rubber or natural or synthetic rubber compositions, said extruder arrangement (1) comprising a screw extruder (12) with an extruder screw (16), wherein downstream of the screw extruder (12) a conveying device is connected in the conveying direction, wherein the conveying device is a planetary gear pump (18) whose outer ring (22) is rotatably supported, **characterized in that** a pressure sensor is provided on the input side of the planetary gear pump (18) which pressure sensor is connected to a control device that controls the rotation of the outer ring (22).

2. The extruder arrangement (1) as claimed in claim 1, **characterized in that** the planetary gear pump (18) is configured as a planetary gear with a helical gearing.

3. The extruder arrangement (1) as claimed in one of the preceding claims, **characterized in that** the sun gear (20) of the planetary gear pump (18) is connected to the extruder screw (16) in a rotationally-locked manner.

4. The extruder arrangement as claimed in claim 1 or 2, **characterized in that** the planet carrier (24) is connected to the extruder screw (16) in a rotationally-locked manner.

5. The extruder arrangement as claimed in one of the preceding claims, **characterized in that** the outer ring (22) is coupled to a brake.

6. The extruder arrangement as claimed in one of the preceding claims, **characterized in that** the outer ring (22) is provided with a separate drive system that may be controlled.

7. The extruder arrangement as claimed in claim 5, **characterized in that** the brake is adjustable and/or may be controlled by means of the control device.

8. The extruder arrangement as claimed in one of the preceding claims, **characterized in that** the planet gears (26 to 30) are supported from the suction side and that the planet carrier (24) comprises indentations (36, 38 and 40) through which the viscous compound may flow.

9. The extruder arrangement as claimed in one of the preceding claims, **characterized in that** the helical gearing comprises an angle of 10 to 60 degrees, preferably somewhat more than 20 degrees.

## Revendications

1. Dispositif d'extrusion (1) pour les matières visqueuses, notamment le caoutchouc, ou des composés de caoutchouc naturel ou synthétique, avec une extrudeuse à vis (12) avec une vis de l'extrudeuse (16), à laquelle en direction de transport en aval un dispositif de distribution est raccordé, où le dispositif de transport, est une pompe planétaire (18), dont la bague extérieure (22) est rotative, **caractérisé en ce qu'**un capteur de pression est prévu sur le côté entrée de la pompe planète (18), qui est raccordé à un dispositif de commande qui commande la rotation de la bague extérieure (22).

2. Dispositif d'extrusion (1) selon la revendication 1, **caractérisé en ce que** la pompe planétaire (18) est formée suivant la nature d'un engrenage planétaire avec des dents hélicoïdales.

3. Dispositif d'extrusion (1) selon l'une des revendications précédentes **caractérisé en ce que** la roue solaire (20) de la pompe planétaire (18) est raccordée solidaire en rotation à la vis de l'extrudeuse (16).

4. Dispositif d'extrusion selon la revendication 1 ou 2, **caractérisé en ce que** la cage de transmission planétaire (24) est raccordée solidaire en rotation à la vis de l'extrudeuse (16).

5. Dispositif d'extrusion selon l'une des revendications précédentes **caractérisé en ce que** la bague extérieure (22) est couplée à un frein.

6. Dispositif d'extrusion selon l'une des revendications précédentes **caractérisé en ce que** la bague extérieure (22) est fourni avec un entraînement séparé qui peut être commandé.

7. Dispositif d'extrusion selon la revendication 5, **caractérisé en ce que** le frein est réglable et / ou peut être commandé par le dispositif de commande.

8. Dispositif d'extrusion selon l'une des revendications précédentes **caractérisé en ce que** les roues planétaires (26 à 30) sont montées à partir du côté aspiration et la cage (de transmission planétaire (24) présente des rainures (36,38 et 40) pouvant être traversées par la masse visqueuse.

9. Dispositif d'extrusion selon l'une des revendications précédentes **caractérisé en ce que** les dents hélicoïdales présentent un angle de 10 à 60 degrés, de préférence un peu plus de 20 degrés.
